# FASCICULE DE BREVET EUROPEEN

(11) **EP 1 817 359 B1**
(45) Date de publication et mention de la délivrance du brevet: **22.05.2013**
(21) Numéro de dépôt: 05796925.5
(22) Date de dépôt: 07.10.2005
(51) Int. Cl.: C08G 63/08

(54) **PROCÉDÉ DE POLYMÉRISATION CONTRÔLÉE DES O-CARBOXY ANHYDRIDES DÉRIVÉS D'ALPHA-HYDROXY ACIDES**
VERFAHREN ZUR KONTROLLIERTEN POLYMERISATION VON O-CARBOXYANHYDRIDEN, DIE SICH VON ALPHA-HYDROXYSÄUREN ABLEITEN
METHOD FOR CONTROLLED POLYMERIZATION OF O-CARBOXY ANHYDRIDES DERIVED FROM ALPHA-HYDROXY ACIDS

(30) Priorité: 08.10.2004 FR 0410639
(43) Date de publication de la demande: 15.08.2007
(73) Titulaire: Centre National de la Recherche Scientifique (CNRS), 75016 Paris (FR); Université Paul Sabatier (Toulouse III), 31400 Toulouse (FR)
(72) Inventeur: BOURISSOU, Didier, F-31830 PLAISANCE DU TOUCH (FR); THILLAYE DU BOULLAY, Olivier, F-81600 MONTANS (FR); MARCHAL, Emmanuel, F-81000 ALBI (FR); MARTIN-VACA, Bianca, F-31400 TOULOUSE (FR)
(74) Mandataire: Regimbeau
(86) Numéro de dépôt international: PCT/EP2005/055103
(87) Numéro de publication internationale: WO 2006/037812

(56) Documents cités:
- US-A- 5 292 859
- H.R. KRICHELDORF; J. M. JONTÉ: "New Polymer Syntheses 8. Synthesis and Polymerization of L-Lactic Acid O-Carboxyanhydride (%-Methyl-Dioxolan-2,4-dione)" POLYMER BULLETIN, vol. 9, 1983, pages 276-283, XP009049576 cité dans la demande
- I. J. SMITH; B. J. TIGHE: "studies in Ring Opening Polymerisation, 6a) Tertiary Base initiated Polymerisation of 5-Phenyl-1,3-doixolan-2,4-dione" MAKROMOL. CHEM, vol. 182, 1981, pages 313-324, XP009049619 cité dans la demande

## Description

La présente invention concerne un procédé de polymérisation contrôlée des 1,3-dioxolane-2,4-diones, également appelées O-Carboxy Anhydrides (OCAs).

Les poly(α-hydroxy acides) sont des polyesters biodégradables et biocompatibles, particulièrement intéressants pour la chirurgie et la vectorisation de médicaments. En particulier, ils peuvent constituer des biomatériaux, par exemple utiles en tant que matière première pour la fabrication de prothèses, d'implants, ou bien encore pour être mis en oeuvre comme supports permettant la libération de principes actifs. L'application des poly(α-hydroxy acides) à titre de fils de suture résorbables, de substituts cutanés temporaires ou de fibres textiles est également possible.

Dans le domaine des polymères biodégradables destinés au biomédical, que ce soit pour la chirurgie (fils de suture, chirurgie orthopédique etc.) ou la vectorisation de principes actifs, la difficulté est liée au contrôle des propriétés requises pour une application donnée.

Pour la conception de systèmes d'adressage *in vivo* de molécules actives ou plus précisément de transport et de délivrance contrôlés de médicaments au niveau des cibles thérapeutiques visées, il est nécessaire d'élaborer des matériaux dont les dimensions, la structure physique et chimique, permettent tout à la fois le franchissement des différentes barrières physiologiques, la recherche et la reconnaissance de la cible puis son traitement ou sa destruction. La copolymérisation de monomères biocompatibles incluant la stéréocopolymérisation (copolymérisation d'entités énantiomères) et la modification chimique permettent l'adaptation des propriétés d'une substance macromoléculaire. (Vert, M. ; l'actualité chimique, nov.-déc. 2003, p. 20-25).

Jusqu'à présent, les poly(α-hydroxy acides) les plus utilisés sont les poly(acide glycolique) (PGA) et poly(L-acide lactique) (PLA), qui sont des polymères non seulement biodégradables, c'est-à-dire clivables sous l'effet de la biochimie du vivant, mais également bioassimilables en raison de la nature même des α-hydroxy acides libérés.

Les PGA et PLA peuvent être préparés par polymérisation des diesters cycliques de l'acide gycolique (glycolide) ou de l'acide L-lactique (L-lactide) ou par polycondensation des hydroxyacides. Pour l'obtention de copolymères diblocs ou triblocs, la voie la plus exploitée semble être la copolymérisation par ouverture de cycle du glycolide et des lactides (L et D) en présence de 2-éthyl hexanoate d'étain (Kowalski, A. ; Libiszowski, J. ; Duda, A. ; Penczek, S. ; Macromolecules, 2000, 33, 1964).

La polymérisation ou copolymérisation par ouverture d'hétérocycles de type diesters d'α-hydroxy acides est limitée en pratique aux acides glycolique et lactiques, ce qui restreint bien sûr les possibilités d'adaptation aux propriétés requises et contraint à de délicates copolymérisations avec d'autres monomères cycliques tels les N-Carboxy Anhydrides dérivés d'amino acides (FR 2 838 964).

Si la copolymérisation et la stéréocopolymérisation des PGA et PLA ouvrent la voie à de nombreux composés macromoléculaires dégradables, ces polymères ne sont généralement pas fonctionnalisés. Or, de nos jours, la diversification des propriétés et la nécessité de répondre à des cahiers des charges de plus en plus exigeants et spécifiques requièrent la synthèse de polymères fonctionnalisés pour couvrir une gamme plus large d'applications thérapeutiques, notamment en pharmacologie.

Les 1,3-dioxolane-2,4-diones, communément désignées sous le terme de O-Carboxy Anhydrides (en abrégé OCAs), sont des hétérocycles à 5 sommets très étudiés dans la littérature en raison de leurs nombreuses applications potentielles. Ils sont par exemple utilisés pour la modification chimique de chaînes latérales d'antibiotiques (Lilly, Eli & Co ; US 3 641 021). Leur préparation par phosgénation des α-hydroxy acides correspondants est connue depuis longtemps, notamment par les travaux de W.H. Davies (J. Chem. Soc, 1951, 1357-1359).

Tous les essais de polymérisation réalisés sur les OCAs, en particulier sur la 5-méthyl-1,3-dioxolane-2,4-dione (dérivée de l'acide lactique), ont conduit de façon aléatoire à des oligomères (masses molaires Mₙ inférieures à 3000 g/mol) comme le montrent bien les travaux de H. R. Kricheldorf et J.M. Jonté (Polym. Bulletin, 1983, 9, 276-281). En dépit de plusieurs catalyseurs basiques testés (pyridine, triéthylamine, t-butylate de potassium, titanate de tetra butyle), les auteurs précités n'ont synthétisé que des polymères de masse molaire inférieure à 3000 g/mol.

La publication Smith, J ; Tighe, J. ; Makromol. Chem, 1981, 182, 313, décrit la polymérisation de la 5-phényl-1,3-dioxolane-2,4-dione en présence d'une pyridine ou d'une pyridine substituée. Le procédé décrit conduit à la formation d'un polymère ayant une masse molaire moyenne en nombre comprise entre 2 100 et 3 940 g/mol ; l'indice de polydispersité étant compris entre 1,2 et 1,3. Au vu de leurs résultats, les auteurs de cette publication ont remarqué que la masse molaire du polymère obtenu est indépendante de la concentration initiale en pyridine.

En fonction de l'application désirée des poly(α-hydroxy acides), il est souhaitable de pouvoir contrôler la masse molaire du polymère synthétisé. Ainsi, pour des applications biomédicales comme supports permettant la libération de principes actifs, il est préférable de pouvoir adapter la masse molaire du polymère au type d'application thérapeutique envisagée : par exemple, des masses de 500 à 5000 pour des préparations injectables, des masses de 50 000 à 100 000 pour des patchs. Pour des applications biomédicales comme fils de suture résorbables ou substituts cutanés temporaires, il est préférable que les polymères aient une masse molaire supérieure à 15000 g/mol.

Il s'ensuit que l'un des objectifs de l'invention est de fournir un procédé de synthèse de poly(α-hydroxy acides), à partir de OCA, qui permette d'obtenir des produits finis de masse molaire en nombre, Mn, contrôlable.

Les inventeurs ont découvert un nouveau système catalytique qui permet la préparation de polyesters d'α-hydroxy acides par polymérisation contrôlée d'OCAs. L'invention fournit une alternative technique plus générale au procédé classique de fabrication de ces polymères par ouverture de cycle des diesters cycliques à six sommets.

L'invention a pour objet un procédé de préparation de poly(α-hydroxy acides) comprenant les étapes successives suivantes :
i) polymérisation de monomères d'OCAs de formule (I), 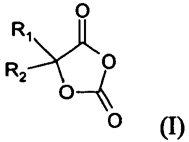 dans laquelle R₁ et R₂, identiques ou différents, représentent indépendamment l'un de l'autre un radical choisi dans le groupe constitué par
   ■ l'hydrogène,
   ■ les radicaux alkyles en C₁-C₁₂, linéaires ou ramifiés, saturés ou insaturés,
   ■ les radicaux aralkyles en C₇-C₂₀,
   ■ les radicaux cycloalkyles, simples ou fusionnés, en C₃-C₁₄,
   ■ les radicaux hétérocycloalkyles, simples ou fusionnés en C₂-C₁₄,
   ■ les radicaux aromatiques, simples ou fusionnés, en C₆-C₁₄, et
   ■ les radicaux hétéroaromatiques, simples ou fusionnés en C₃-C₁₄ l'ensemble desdits radicaux étant éventuellement substitués par un ou plusieurs radicaux, le cas échéant protégés, choisis dans le groupe constitué par les halogènes, -NO₂, -OH, -NH₂, -SH, -COOH, -NH-NH₂ et -NH-C(NH)-NH₂ ;
      ou
      R₁ et R₂ forment ensemble un cycle ou un hétérocycle, simple ou fusionné, en C₄-C₁₄ ou C₃-C₁₄ respectivement, éventuellement substitué par un ou plusieurs radicaux, le cas échéant protégés, choisis dans le groupe constitué par les halogènes, -NO₂, -OH, -NH₂, - SH, -COOH, -NH-NH₂ et -NH-C(NH)-NH₂ ;
      dans un solvant organique, avantageusement anhydre, à une température comprise entre -20 et 200°C, avantageusement entre 0 et 100°C, encore plus avantageusement entre 20 et 50°C; puis
ii) le cas échéant purification du polymère obtenu suite à l'étape i), et
iii) récupération du polymère obtenu suite à l'étape i) ou ii),
   caractérisé en ce que la réaction de polymérisation de l'étape i) est réalisée de manière contrôlée en présence d'un système catalytique comprenant une base, ladite base étant un hétérocycle aromatique à 5 ou 6 chaînons comprenant au moins un atome d'azote endocyclique, sous réserve que lorsque la base est utilisée seule dans le système catalytique, elle ne représente pas la pyridine, la 2-méthylpyridine, la 2,6-diméthylpyridine ou la 2-méthoxypyridine.

La réaction de polymérisation peut s'écrire : 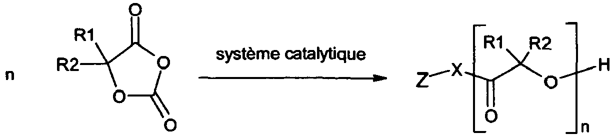 la signification du radical Z dépendant du système catalytique utilisé et X représentant un hétéroatome choisi dans le groupe constitué par O, S et N.

Les radicaux R₁ et R₂ représentent avantageusement, indépendamment l'un de l'autre, un radical choisi dans le groupe constitué par l'hydrogène, les radicaux alkyles, linéaires ou ramifiées, saturés ou insaturés, en C₁-C₆, les radicaux (hétéro)cycloalkyles à 5 ou 6 chaînons et les radicaux (hétéro)aromatiques à 5 ou 6 chaînons, lesdits radicaux pouvant éventuellement être substitués par un ou plusieurs radicaux, le cas échéant protégés, choisis dans le groupe constitué par les halogènes, -NO₂, -OH, -NH₂, -SH, - COOH, -NH-NH₂ et -NH-C(NH)-NH₂.

Les radicaux R₁ et R₂ représentent encore plus avantageusement, indépendamment l'un de l'autre, un radical choisi dans le groupe constitué par l'hydrogène, le méthyle et le phényle.

Selon une variante avantageuse de l'invention, R₁ représente le radical-CF₃ et R₂ représente le radical méthyle.

Dans ce qui suit, le terme polymère désignera un poly(α-hydroxy acide) et le terme monomère désignera un OCA, sauf indications contraires.

L'expression « alkyles saturés ou insaturés » dans le cadre de la présente invention désigne des alcanes, des alcènes ou des alcynes.

Le terme « aralkyle » dans le cadre de la présente invention désigne des radicaux aryles liés à des radicaux alkyles, comme par exemple le benzyle ou le phénéthyle.

Les termes « hétérocycloalkyle » et « hétéroaromatique » dans le cadre de la présente invention désigne des cycles, respectivement aliphatiques ou aromatiques, comprenant un ou plusieurs hétéroatomes, choisis dans le groupe constitué par l'azote, l'oxygène et le soufre.

Le terme « halogène » désigne le chlore, le fluor, l'iode et le brome.

Dans le cadre de la présente invention, les radicaux peuvent être protégés par des groupements protecteurs appropriés classiques qui permettent de limiter ou d'empêcher toute réaction indésirable desdits radicaux durant la réaction de polymérisation. Comme exemples de groupements protecteurs des fonctions amine, hydrazine et guanidine, on peut notamment citer le t-butyloxycarbonyle (Boc), le 9-Fluorénylméthyloxycarbonyl (Fmoc), le benzyloxycarbonyle (Cbz) et le benzyle. Comme exemples de groupements protecteurs des fonctions alcools, on peut notamment citer les silyl éthers, les acétates, les acétals, les éthers et les éthers de PMB. Comme exemple de groupements protecteurs des fonctions acides carboxyliques, on peut citer les esters, tels que les esters de benzyle, de tertiobutyle et de triméthylsilyle. Comme exemples de groupements protecteurs des fonctions thiols, on peut notamment citer les thioacétates, les thioacétals et les thioéthers.

Selon une caractéristique essentielle de l'invention, la réaction de polymérisation de l'étape i) est réalisée de manière contrôlée, c'est-à-dire que la masse molaire, en nombre ou en poids, du polymère obtenu à la fin de la réaction de synthèse peut être déterminée à l'avance en réglant la quantité molaire introduite de système catalytique par rapport à la quantité molaire initiale de monomère, c'est-à-dire en réglant le rapport molaire initial monomère/(système catalytique). En effet, les inventeurs ont découvert que la masse molaire, en nombre ou en poids, du polymère obtenu est une fonction quasi-linéaire du rapport molaire initial monomère/(système catalytique), le coefficient directeur dépendant du solvant dans lequel la réaction se déroule (effet solvant). On peut ainsi synthétiser facilement des polymères de masse molaire en nombre supérieure à 3 000 g/mol en introduisant la quantité molaire nécessaire de système catalytique, par rapport à la quantité molaire initiale de monomère.

Plus on désire obtenir un polymère de masse molaire élevée, plus le rapport molaire initial monomère/(système catalytique) doit être élevé, c'est-à-dire que plus la quantité molaire introduite de système catalytique doit être faible par rapport à la quantité molaire initiale de monomère.

Selon une variante avantageuse de l'invention, le procédé de polymérisation est caractérisé en ce que le rapport molaire monomère/(système catalytique) est supérieur à 10, avantageusement compris entre 20 et 1000, encore plus avantageusement compris entre 50 et 1000, encore plus avantageusement compris entre 120 et 1000, encore plus avantageusement compris entre 200 et 1000.

La base présente dans le système catalytique selon l'invention est avantageusement un hétérocycle aromatique à 5 ou 6 chaînons comprenant au moins un atome d'azote endocyclique conjugué avec un autre atome d'azote endo ou exocyclique.

Selon une variante de l'invention, ladite base est une amino-pyridine de formule (II) 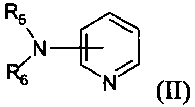 dans laquelle R₅ et R₆ représentent indépendamment l'un de l'autre un radical alkyle en C₁-C₆, linéaire ou ramifié, saturé ou insaturé, ou R₅ et R₆ forment ensemble un hétérocycloalkyle à 5 ou 6 chaînons, le groupe -NR₅R₆ étant en position 2 ou 4.

Le noyau des pyridines peut également être substitué par un ou plusieurs radicaux alkyles en C₁-C₆.

En particulier, ladite base est la 4-diméthylamino pyridine (DMAP).

Selon une autre variante de l'invention, ladite base est avantageusement un imidazole de formule (III) 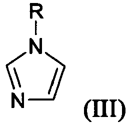 dans laquelle R représente un radical alkyle en C₁-C₆ linéaire ou ramifié, saturé ou insaturé.

Le noyau imidazole peut également être substitué par un ou plusieurs radicaux alkyles en C₁-C₆.

En particulier, ladite base est le N-méthyl-imidazole.

Selon une variante avantageuse de l'invention, le système catalytique selon l'invention comprend uniquement une base. Dans ce cas, le radical Z, dans la formule semi développée du polymère, représente l'atome d'hydrogène et X représente l'atome d'oxygène.

Le rapport molaire initial monomère/base est avantageusement supérieur à 10, encore plus avantageusement compris entre 20 et 1000, encore plus avantageusement compris entre 50 et 1000, encore plus avantageusement compris entre 120 et 1000, encore plus avantageusement compris entre 200 et 1000.

Selon une autre variante avantageuse de l'invention, le système catalytique comprend en outre un réactif protique.

Au sens de la présente invention, on entend par l'expression « réactif protique » tout réactif qui comporte des atomes d'hydrogène susceptibles d'être libérés sous forme de protons.

Le réactif protique permet, grâce à la libération d'au moins un proton, d'amorcer la réaction de polymérisation. Une fois la réaction de polymérisation amorcée, elle est auto-entretenue grâce à la fonction alcool de l'oligomère ainsi formé.

La réaction de polymérisation peut alors s'écrire : 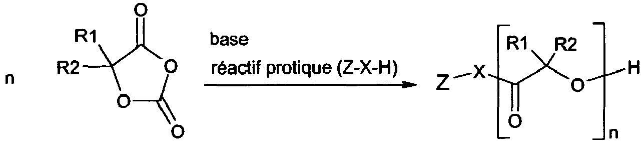 Z représentant le reste du réactif protique et X représentant un hétéroatome choisi dans le groupe constitué par N, O et S.

Dans le cadre de la présente invention, le réactif protique est avantageusement choisi dans le groupe constitué par l'eau, les alcools, les amines primaires et secondaires, les thiols et les polymères à fonctionnalité alcool, amino ou thiol.

Dans le cadre de la présente invention, tout alcool, primaire, secondaire ou tertiaire, peut être utilisé comme réactif protique. Par exemple, on peut utiliser le l'éthanol, le pentanol, la Boc-éthanolamine ou des alcools de structure plus complexe. De même, toute amine primaire ou secondaire peut être utilisée dans le cadre de la présente invention. Par exemple, on peut citer la benzylamine, l'héxylamine, l'oleylamine, l'éthanolamine, les amino-acides basiques tels que la lysine ou les peptides C-protégés ou des amines de structure plus complexe. Tout thiol peut également être utilisé comme réactif protique. Par exemple, on peut utiliser le benzylthiol, les dérivés de la cystéine.

Dans le cadre de la présente invention, l'expression « polymères à fonctionnalité alcool, amino ou thiol » désigne tous les polymères porteurs de substituants comportant au moins une fonction réactive choisie dans le groupe constitué par les fonctions -OH, -NH₂ et -SH.

Le réactif protique est avantageusement choisi dans le groupe constitué par l'eau, les alcools aliphatiques en C₁-C₁₂, les poly(acide glycolique), les poly(acide lactique) et leurs copolymères.

Selon une variante avantageuse de l'invention, le réactif protique est choisi dans le groupe constitué par les poly(acide glycolique), les poly(acide lactique) et leurs copolymères. On obtient alors des copolymères blocs (lactide et/ou glycolide)-OCA.

Le réactif protique, présent dans le système catalytique, permet un meilleur contrôle de l'indice de polydispersité (Ip) (dispersion en masse autour de la masse moyenne), qui est plus proche de 1, et il favorise également le contrôle de la masse du polymère.

Lors de l'étape i), le solvant est avantageusement choisi dans le groupe constitué par les solvants aliphatiques chlorés, les éthers, les éthers cycliques ou les aromatiques.

Le polymère obtenu suite à l'étape i) peut le cas échéant être purifié lors de l'étape ii) puis le polymère est récupéré lors de l'étape iii).

Ces opérations de purification et de récupération du polymère sont réalisées de manière classique, par exemple par élimination du solvant par évaporation sous pression réduite ou par concentration ou non du milieu réactionnel suivie d'une précipitation par addition d'un non solvant tel qu'un alcane en C₁-C₆.

On obtient ainsi des polymères et matériaux possédant les caractéristiques dimensionnelles, mécaniques, chimiques, biochimiques et biologiques requises pour toutes les applications envisagées des polyesters dérivés des α-hydroxy acides :
- implants, dentisterie, endoprothèses, chirurgie orthopédique,
- systèmes d'adressage *in vivo* de molécules actives, c'est-à-dire de transport et de délivrance contrôlés de principes actifs au niveau des cibles biologiques choisies, que ce soit dans le domaine médical ou cosmétique.

L'invention permet de résoudre de manière efficace les problèmes posés par la mise en oeuvre obligée de la méthode de l'art antérieur :
- possibilité de polymériser et copolymériser un très grand nombre d'α-hydroxy acides, y compris ceux comportant des groupes fonctionnels convenablement protégés.
- augmentation et harmonisation des vitesses de polymérisation ce qui est recherché, non seulement pour des questions de coût, mais aussi pour préparer des copolymères « statistiques » ou « blocs ».
- accès à des polymères « sur mesure », c'est-à-dire possédant les caractéristiques physiques et les structures chimiques désirées.

Les polymères obtenus par le procédé selon l'invention ont avantageusement un indice de polydispersité compris entre 1 et 2, plus avantageusement compris entre 1 et 1,5, et encore plus avantageusement compris entre 1 et 1,3. Les polymères obtenus par le procédé selon l'invention ont donc une courbe de distribution des masses molaires resserrée, les masses molaires sont donc peu dispersées. Plus l'indice de polydispersité a une valeur proche de 1, plus le nombre de macromolécules formées qui ont la même masse molaire est important.

Dans le cas d'utilisation de polymères obtenus par le procédé selon l'invention dans des systèmes d'adressage *in vivo* de molécules actives, il est particulièrement avantageux que ces polymères aient un indice de polydispersité proche de 1.

Un indice de polydispersité voisin de 1 confirme le caractère « vivant » de la polymérisation, soit l'absence de réactions secondaires et la bonne définition des polymères comportant des terminaisons actives. L'étroitesse de la distribution moléculaire peut en outre permettre d'ajuster plus précisément la composition en masse de la préparation médicamenteuse en fonction de la cible désirée et des mécanismes biologiques impliqués. Par exemple, dans les préparations injectables, il est préférable que les molécules soient de même taille, en particulier pour faciliter le passage dans les capillaires. Enfin, d'un point de vu réglementaire, il est plus facile de faire homologuer par les agences de médicaments des principes actifs monomoléculaires.

Selon une variante de l'invention, les polymères obtenus par le procédé selon l'invention ont avantageusement une masse molaire moyenne en nombre supérieure à 2 000 g/mol, encore plus avantageusement supérieure à 5 000 g/mol.

Selon une autre variante de l'invention, les polymères obtenus par le procédé selon l'invention ont avantageusement une masse molaire moyenne en nombre supérieure à 25 000 g/mol, encore plus avantageusement supérieure à 30 000 g/mol.

La présente invention concerne également de nouveaux polymères, susceptibles d'être obtenus par le procédé selon l'invention, de formule (IV) 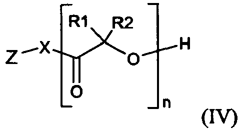 dans laquelle
- R1 et R2 ont la même signification que celle donnée pour l'OCA de formule (I) ;
- X représente un hétéroatome, choisi dans le groupe constitué par O, N et S, et Z représente un radical alkyle en C₁-C₁₂, linéaire ou ramifié, saturé ou insaturé ;
- -X-Z représente un polymère choisi dans le groupe constitué par les poly(acide glycolique), les poly(acide lactique) et leurs copolymères, lesdits polymères étant terminés par un radical -X'-Z' dans lequel X' représente un hétéroatome, choisi dans le groupe constitué par O, N et S, et Z' représente un radical alkyle en C₁-C₁₂, linéaire ou ramifié, saturé ou insaturé ;
- n est supérieur ou égal à 1.

n est avantageusement compris entre 1 et 500, encore plus avantageusement compris entre 5 et 500, encore plus avantageusement compris entre 10 et 400, encore plus avantageusement compris entre 15 et 350.

Selon une variante avantageuse de l'invention, dans la formule (IV), X représente l'hétéroatome O et Z représente un radical alkyle en C₁-C₆.

Selon une autre variante avantageuse de l'invention, dans la formule (IV), -X-Z représente un radical de formule (V) 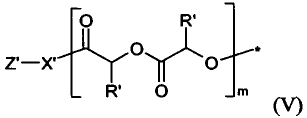 dans laquelle R' représente H ou CH₃, X' représente un hétéroatome, choisi dans le groupe constitué par O, N et S, et Z' représente un radical alkyle en C₁-C₁₂, linéaire ou ramifié, saturé ou insaturé. En particulier, X' représente l'hétéroatome O et Z' représente un radical alkyle en C₁-C₆.

L'invention concerne également un polymère de formule (VII) 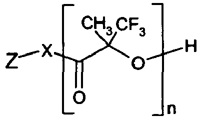 dans laquelle X représente un hétéroatome, choisi dans le groupe constitué par O, N et S, et Z représente un atome d'hydrogène ou un radical alkyle en C₁-C₁₂, linéaire ou ramifié, saturé ou insaturé.

Les polymères de formule (IV) ou (VII) ont avantageusement un indice de polydispersité compris entre 1 et 2, plus avantageusement compris entre 1 et 1,5 et encore plus avantageusement compris entre 1 et 1,3.

Selon une variante de l'invention, les polymères de formule (IV) ou (VII) ont avantageusement une masse molaire moyenne en nombre supérieure à 2 000 g/mol, encore plus avantageusement supérieure à 5 000 g/mol.

Selon une autre variante de l'invention, les polymères de formule (IV) ou (VII) ont avantageusement une masse molaire moyenne en nombre supérieure à 25 000 g/mol, encore plus avantageusement supérieure à 30 000 g/mol.

La présente invention concerne enfin l'utilisation des polymères susceptibles d'être obtenus par le procédé selon l'invention et des nouveaux polymères décrits pour la vectorisation de principes actifs et pour la fabrication de biomatériaux.

Les exemples suivants permettent d'illustrer l'invention et ils ne sont pas limitatifs. Sauf indication contraire, dans les exemples qui suivent :
○ le toluène, le pentanol et le THF (tétrahydrofurane) utilisés ont été distillés sur sodium. Le DCM (dichlorométhane) et le DCE (1-2,dichloroéthane) ont été distillés sur CaH₂. La DMAP a été recristallisée dans le toluène ;
○ les masses moyennes en nombre (Mn) et en poids (Mw) ont été déterminées par GPC (chromatographie en phase gazeuse) dans le THF (pompe Waters 600 ; détecteur par indice de réfraction Waters 2410 ; colonnes Waters Styragel HR1 et HR 5E). Des étalons de polystyrène de faible indice de polydispersité ont été utilisés pour établir la courbe d'étalonnage ;
○ les spectres de RMN ¹H sont enregistrés dans le CDCl₃ (spectromètre Brucker à 200 MHz).

### Exemple 1 : Préparation d'un poly(acide lactique) de masse molaire supérieure à 20 000

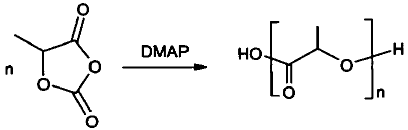

Dans un réacteur de 5 mL sous atmosphère inerte, on introduit du dichlorométhane distillé anhydre (1,7 mL) et l'OCA de l'acide (D,L) lactique (0,465 g ; 4,0 mmoles). Après solubilisation, on introduit la DMAP (2,2 mg ; 0,018 mmole) soit un rapport [OCA]/[DMAP]=220. On maintient le milieu sous agitation à 25°C jusqu'à cessation du dégagement de gaz carbonique. La polymérisation est terminée en moins de 30 min. Après élimination du solvant par évaporation sous pression réduite, on recueille le polymère attendu (0,29 g) avec un rendement supérieur à 98%. Sa masse molaire moyenne en nombre (Mₙ) est de 30 400 avec un indice de polydispersité (Iₚ = M_{w}/Mₙ) égal à 1,18.

On effectue une deuxième opération de polymérisation exactement dans les mêmes conditions. On obtient le polymère attendu de Mₙ=29300 et Iₚ=1,18.

On recommence une troisième fois l'opération, toujours dans les mêmes conditions. Le polymère obtenu a une Mₙ=34 900 et un Ip=1,13.

L'homopolymérisation, catalysée par la DMAP, de l'OCA dérivé de l'acide lactique est donc bien reproductible.

### Exemple 2 : Homopolymérisation de la 5,5-diméthyl-1,3-dioxolane-2,4-dione en présence de DMAP et de n-pentanol

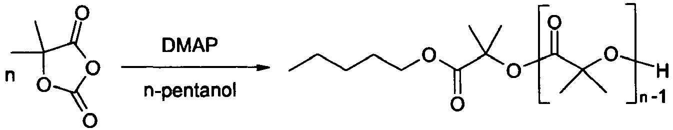

Dans un réacteur de 5 mL sous atmosphère inerte, on introduit du dichlorométhane anhydre (1,5 mL) et l'OCA dérivé de l'acide 2-hydroxy isobutyrique (0,5g ; 3,84 mmoles). Après solubilisation, on introduit la DMAP (28,46 mg ; 0,232 mmole) solubilisée dans le dichlorométhane (1 mL) puis le n-pentanol (10,27 mg ; 0,116 mmole) soit un ratio [OCA]/[n-pentanol]=33. On porte le milieu à 33°C. La polymérisation est complète au bout de 1,75 heure à cette température.

Le milieu est ensuite concentré sous pression réduite pour donner le polymère attendu avec un rendement quantitatif :
Résultats: Mn=3574, Ip=1,12, Mₜₕ=2926 (GPC, THF, standards de polystyrène, WATERS) RMN ¹H (CDCl₃) : 1,51 (large, CH₃)
La masse molaire obtenue (Mn) est voisine de celle attendue (Mₜₕ,)

### Exemple 3 : Homopolymérisation de la 5,5-diméthyl-1,3-dioxolane-2,4-dione avec des ratios [OCA]/[DMAP] et [OCA]/[n-pentanol] élevés.

On opère comme à l'exemple 2 mais à 55°C, dans le 1,2-dichloroéthane comme solvant. On utilise un ratio [OCA]/[DMAP]=60 et [OCA]/[n-pentanol]=120. On obtient quantitativement le polyester attendu avec une Mn=18000 et un Ip=1,00.

### Exemple 4 : Homopolymérisation de la 5-phényl-1,3-dioxolane-2,4-dione en présence d'eau (réactif protique).

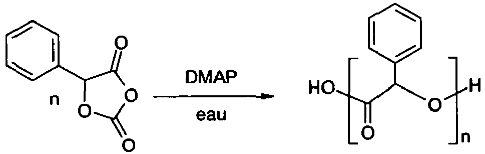

On introduit dans un schlenk sous atmosphère d'argon l'OCAs dérivé de l'acide S-mandélique (0,3 g ; 1,68 mmole). Dans un autre schlenck on introduit le dichlorométhane (1,5 mL) et la DMAP (37,4 mg ; 0,306 mmole). Après solubilisation de la DMAP, on introduit ce mélange dans le premier schlenk au moyen d'une canule. On ajoute l'eau (2,76 µL; 0,153 mmole) et porte à 33°C sous agitation. La polymérisation est terminée après 4 heures à cette température.

Le solvant est éliminé par évaporation sous pression réduite pour conduire au polymère attendu avec un rendement quantitatif.
Résultats : M_{w}=1520 ; Iₚ=1,08 ; Mₜₕ=1492 (GPC, THF, standards de polystyrène, chaîne WATERS) RMN *^{l}H* (CDCl₃): *6,06* (large, 1H, CH), 7,25 (large, 5H, Ph).
Electrospray (CH₃CN + NH₄OH): m/z = 18 + n*134 + 23 (Na⁺) avec n = 2,3...12.

### Exemple 5 : Polymérisation du HOCA dans différents solvants et pour différents rapports monomère/base/réactif protique

HOCA représente l'OCA dérivé de l'acide 2-hydroxy isobutyrique, soit le 5,5-diméthyl-1,3-dioxylane-2,4-dione.

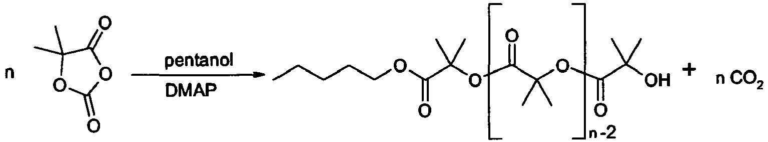

### a) Réaction dans le toluène

### i) Rapport monomère/base/réactif protique de 50/1/1.

Dans un tube de schlenk préalablement séché, on met en solution le HOCA (3,44 mmol ; 447 mg) dans 4,5 mL de toluène. On ajoute successivement le pentanol (0,069 mmol ; 7,5 µL) et la DMAP (0,069 mmol ; 8,4 mg). On chauffe le milieu réactionnel à 50 °C.

L'avancement de la réaction est suivi par RMN ¹H. La conversion est totale au bout de 90 min. L'évolution des masses moyennes est contrôlée par GPC et est donnée dans le tableau 1 suivant :

**Tableau 1**

| Temps (min) | Mn | Mw | IP | Conversion |
|---|---|---|---|---|
| 30 | 3972 | 4538 | 1,14 | 75 |
| 60 | 5313 | 6460 | 1,21 | 92 |
| 90 | 5602 | 7265 | 1,30 | 100 |
| 145 | 6200 | 7499 | 1,21 | |
| 180 | 6130 | 7199 | 1,17 | |
| 330 | 6393 | 7281 | 1,14 | |

Ces résultats montrent que lorsque le monomère a été totalement consommé (conversion de 100), la masse molaire, en nombre ou en poids, du polymère obtenu ne varie pas d'une manière significative.

### ii)Rapport monomère/ base/réactif protique de 200/1/1.

Dans un tube de schlenk préalablement séché, on met en solution le HOCA (4,35 mmol ; 566 mg) dans 6,0 mL de toluène. On ajoute successivement le pentanol (0,022 mmol ; 160 µL d'une solution 0,138 M de pentanol dans le toluène) et la DMAP (0,022 mmol ; 290 µL d'une solution 0,075M de DMAP dans le toluène). On chauffe le milieu réactionnel à 50 °C.

L'avancement de la réaction est suivi par RMN ¹H. La conversion est totale au bout de 300 min.

On élimine le solvant sous pression réduite. On triture le polymère obtenu dans 10 mL de MTBE ; on filtre puis on rince au MTBE. On sèche sous vide le polyester (260 mg de poudre blanche ; 70%).
Résultats : Mn=12400, Mw=14200, Ip=1,15.

### iii) Rapport monomère/base/réactif protique de 400/1/1

Dans un tube de schlenk préalablement séché, on met en solution le HOC A (3,92 mmol ; 510 mg) dans 1,0 mL de toluène. On ajoute successivement le pentanol (0,010 mmol ; 60 µL d'une solution 0,165 M de pentanol dans le toluène) et la DMAP (0,010 mmol ; 190 µL d'une solution 0,052 M de DMAP dans le toluène). On chauffe le milieu réactionnel à 50°C. L'avancement de la réaction est suivi par RMN¹H. La conversion est totale en 120 min.
Résultats :Mn=33100, Mw=49600, Ip=1,50

### b) Réaction dans le THF

### i) Rapport monomère/base/réactifprotique de 50/1/1.

Dans un tube de schlenk préalablement séché, on met en solution le HOCA (4,41 mmol ; 574 mg) dans 6,0 mL de THF. On ajoute successivement le pentanol (0,088 mmol ; 10 µL) et la DMAP (0,088 mmol ; 10,8 mg). On chauffe le milieu réactionnel à 50 °C.

L'avancement de la réaction est suivi par RMN ¹H, la conversion est totale en 300 min. L'évolution des masses moyennes est contrôlée par GPC et est donnée dans le tableau 2 suivant :

**Tableau 2**

| Temps (min) | Mn | Mw | IP | Conversion |
|---|---|---|---|---|
| 30 | 891 | 964 | 1,08 | 25 |
| 60 | 1488 | 1743 | 1,17 | 38 |
| 90 | 2190 | 2772 | 1,27 | 51 |
| 120 | 2781 | 3714 | 1,34 | 64 |
| 150 | 3288 | 4420 | 1,34 | 82 |
| 180 | 3399 | 4595 | 1,35 | 92 |
| 210 | 3486 | 4689 | 1,34 | 98 |
| 300 | 3539 | 4700 | 1,33 | 100 |

Ces résultats montrent que lorsque le monomère a été totalement consommé (conversion de 100), la masse molaire, en nombre ou en poids, du polymère obtenu ne varie pas d'une manière significative.

### ii)Rapport monomère/base/réactifprotique de 15/1/1.

Dans un tube de schlenk préalablement séché, on met en solution le HOCA (3,04 mmol ; 395 mg) dans 4,0 mL de THF. On ajoute successivement le pentanol (0,20 mmol ; 22,0 µL) et la DMAP (0,20 mmol ; 24,6 mg). On agite le milieu réactionnel à température ambiante.

On contrôle le milieu réactionnel par RMN ¹H après 2 h : consommation totale du monomère.

L'évolution des masses moyennes est suivie par GPC et est donnée dans le tableau 3 suivant :

**Tableau 3**

| Temps (h) | Mn | Mw | IP |
|---|---|---|---|
| 3,0 | 894 | 929 | 1,04 |
| 4,75 | 1024 | 1155 | 1,13 |
| 8,5 | 1275 | 1617 | 1,25 |
| 28 | 1321 | 1675 | 1,27 |

On élimine le solvant sous pression réduite. On triturer le polymère obtenu dans 2 mL de MTBE glacé ; on filtre puis on rince au MTBE glacé. On sèche sous vide le polyester (180 mg de poudre blanche ; 63%).
Résultats : Mn = 1680, Mw = 1880, Ip = 1,12.

Ces résultats montrent que lorsque le monomère a été totalement consommé (conversion de 100), la masse molaire, en nombre ou en poids, du polymère obtenu ne varie pas d'une manière significative.

### c) Réaction dans le DCE

### i) Rapport monomère/base/réactif protique de 50/1/1.

Dans un tube de schlenk préalablement séché, on met en solution le HOCA (5,29 mmol ; 689 mg) dans 7,0 mL de DCE. On ajoute successivement le pentanol (0,106 mmol ; 11 µL) et la DMAP (0,106 mmol ; 12,9 mg). On chauffe le milieu réactionnel à 50 °C.

L'avancement de la réaction est suivi par RMN¹H. La conversion est totale en 130 min. L'évolution des masses moyennes est contrôlée par GPC et est donnée dans le tableau 4 suivant :

**Tableau 4**

| Temps (min) | Mn | Mw | IP | Conversion |
|---|---|---|---|---|
| 30 | 2659 | 3007 | 1,13 | nd |
| 70 | 3199 | 3480 | 1,09 | nd |
| 130 | 3777 | 4090 | 1,08 | 100 |
| 180 | 3845 | 4152 | 1,08 | |
| 210 | 3807 | 4109 | 1,08 | |

Après 4h à 50°C, on élimine le solvant sous pression réduite. On triture le polymère obtenu dans 10 mL de MTBE ; on filtre puis on rince au MTBE. On sèche sous vide le polyester (410 mg de poudre blanche ; 88%).
Résultats : Mn = 4350, Mw = 4000, Ip = 1,09.

Ces résultats montrent que lorsque le monomère a été totalement consommé (conversion de 100), la masse molaire, en nombre ou en poids, du polymère obtenu ne varie pas d'une manière significative.

### Exemple 6 : Copolymérisation par blocs lactide/HOCA

### a) Amorçage au pentanol, rapport Lactide/HOCA/n-pentanol=20/20/1

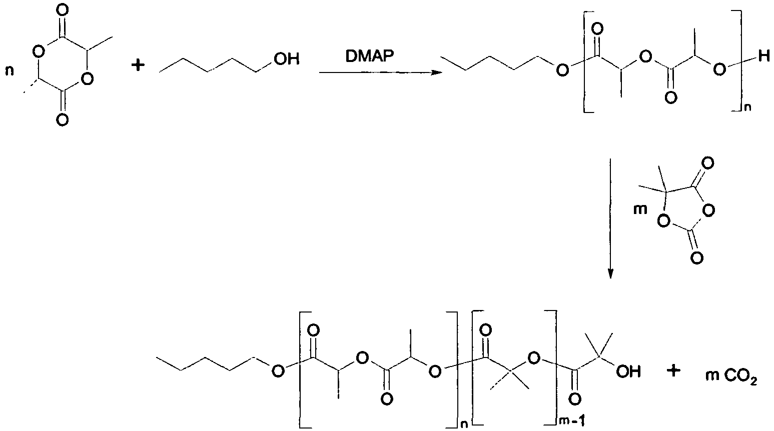

Dans un tube de schlenk préalablement séché, on met en solution le lactide (4,54 mmol ; 650 mg) dans 6,0 mL de DCM. On ajoute successivement le pentanol (0,23 mmol ; 24 µL) et la DMAP (0,45 mmol ; 55 mg). On chauffe le milieu réactionnel à 35°C pendant 48h (consommation totale du lactide).
Résultats : Mn = 2750 ; Mw = 3290 ; Ip = 1,19. (Mn théorique = 2968)

On ajoute le HOCA (4,51 mmol ; 590 mg) au milieu réactionnel et on chauffe à nouveau à 35°C pendant 3 h (consommation totale du HOCA).
Mn = 3850 ; Mw = 4910 ; Ip = 1,28. (Mn théorique = 4408)

On dilue le milieu réactionnel avec 10 mL de DCM et on lave avec 10 mL d'HCl 2N. On laisse décanter et on extrait la phase aqueuse 2 fois avec 10 ml de DCM. On rassemble les phases organiques, on les lave à l'eau et on sèche sur sulfate de magnésium anhydre. On évapore le solvant pour obtenir une poudre blanche (810 mg ; 78%). On triture le polymère dans 10 mL d'éther isopropylique, on filtre et on sèche sous vide.
Résultats :Mn=4150 ; Mw=5250 ; Ip=1,27.

### b) Amorçage au pentanol, rapport Lactide/HOCA/n-pentanol=20/93/1

Dans un tube de schlenk préalablement séché, on met en solution le lactide (1,25 mmol ; 180 mg) dans 2,0 mL de DCM. On ajoute successivement le pentanol (0,063 mmol ; 7 µL) et la DMAP (0,125 mmol ; 15 mg). On chauffe le milieu réactionnel à 35°C pendant 6 jours (consommation totale du lactide).
Résultats : Mn=4820 ; Mw=6290 ; Ip=1,31
On ajoute le HOCA (5,84 mmol ; 760 mg) au milieu réactionnel et on chauffe à nouveau à 35°C pendant 3 h (consommation totale du HOCA).
Résultats : Mn=10 000 ; Mw=14410 ; Ip=1,44.

### c) Amorçage à l'eau ; Rapport Lactide/HOCA/eau = 10/10/1

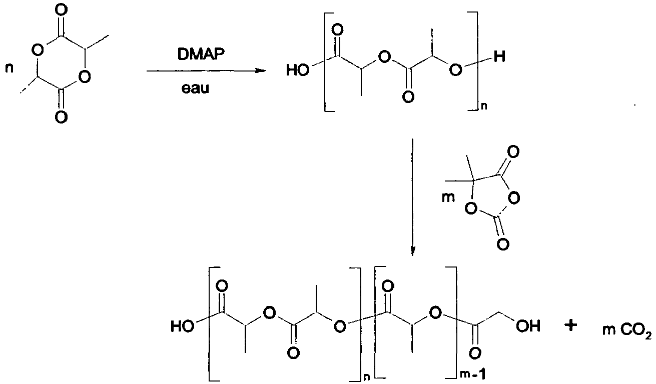

Dans un tube de schlenk préalablement séché, on met en solution le lactide (3,84 mmol ; 550 mg) dans 4,0 mL de DCM. On ajoute successivement une solution de DMAP (0,77 mmol ; 94 mg) dans 1 mL de DCM et l'eau (0,38 mmol ; 7 µL). On chauffe le milieu réactionnel à 33 °C pendant 40 h.

L'analyse du polylactide par RMN¹H confirme la consommation totale du lactide. On note la présence du signal caractéristique du proton en alpha de d'hydroxyle terminal (quadruplet à 4,32 ppm).
Résultats : Mn = 1210 ; Mw = 1640 ; Ip = 1,36. (Mn théorique = 1458)

On ajoute le HOCA (3,84 mmol ; 500 mg) et on chauffe à nouveau le milieu réactionnel à 33 °C pendant 2h30.

L'analyse du copolymère par RMN¹H montre la consommation totale du HOCA et la disparition du signal caractéristique du proton en alpha de d'hydroxyle terminal du polylactide. Cette observation confirme que l'hydroxyle terminal du polylactide joue bien le rôle du réactif protique (amorceur) dans le système catalytique lors de la polymérisation du HOCA.
Résultats : Mn = 1610 ; Mw = 2220 ; Ip = 1,38. (Mn théorique = 2318)

### Exemple 7 : Copolymérisation par blocs lactide/Lac-OCA

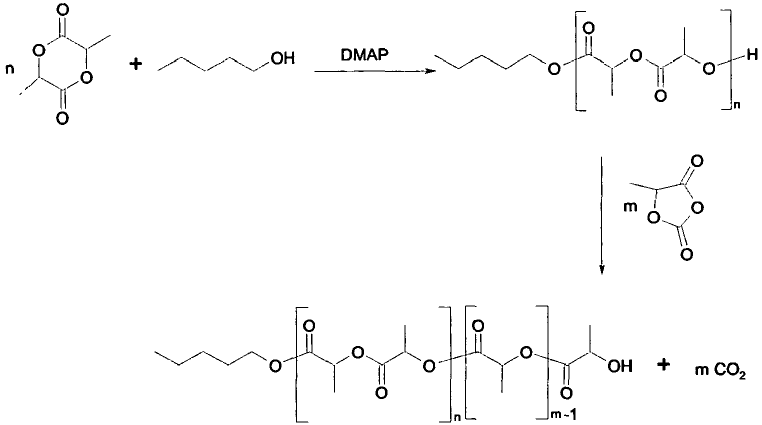

rapport Lactide/Lac-OCA/n-pentanol=20/52/1

Dans un tube de schlenk préalablement séché, on met en solution le lactide (1,53 mmol ; 220 mg) dans 2,0 mL de DCM. On ajoute successivement le pentanol (0,077 mmol ; 8 µL) et la DMAP (0,153 mmol ; 19 mg). On chauffe le milieu reactionnel à 35°C pendant 6 jours (consommation totale du lactide).
Résultats : Mn=4340 ; Mw=5320 ; Ip=1,22

On ajoute le Lac-OCA (3,97 mmol ; 460 mg) au milieu réactionnel et on chauffe à nouveau à 35°C pendant 3 h (consommation totale du Lac-OCA).
Résultats : Mn=8130 ; Mw=106700 ; Ip=1,31.

Le PLA peut donc bien être utilisé en tant que réactif protique dans le système catalytique.

### Exemple 8 : Polymérisation du lac-OCA en présence d'un réactif protique

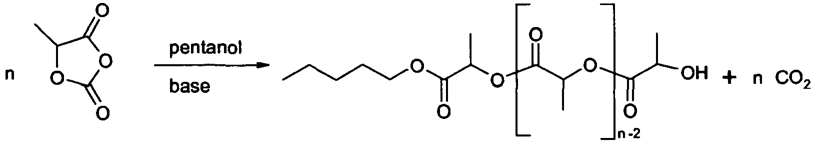

### Influence de la base choisie - comparaison DMAP/2,6-lutidine

Dans un tube de schlenk préalablement séché, on met en solution le lac-OCA (50 équivalents) dans 10 volumes de DCM. On ajoute successivement le pentanol (1 1 équivalent) et la DMAP (1 équivalent) ou la 2,6-lutidine (1 équivalent). On agite le milieu réactionnel à température ambiante.

Les résultats sont donnés dans le tableau 5 suivant

**Tableau 5**

| catalyseur | Mn | Mw | IP | Durée (h) |
|---|---|---|---|---|
| 2,6-lutidine | 1469 | 2607 | 1,77 | 16 |
| DMAP | 5113 | 7233 | 1,41 | 0,25 |

Ces résultats montrent que des masses molaires plus élevées sont obtenues lorsqu'on utilise la DMAP au lieu de la 2,6-lutidine. De plus, l'emploi de la DMAP permet l'obtention de polymères dont l'indice de polydispersité est plus proche de 1.

### Etude du rapport monomère/réactif protique/base

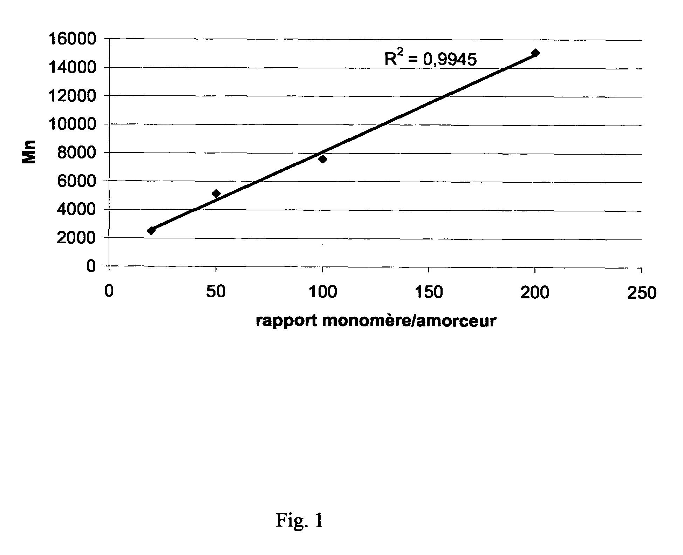

Dans un tube de schlenk préalablement séché, on met en solution le lac-OCA (X équivalents) dans 10 volumes de DCM. On ajoute successivement le pentanol (1 équivalent) et la DMAP (1 équivalent). On agite le milieu réactionnel à température ambiante. A la fin du dégagement de CO2, la réaction est contrôlée par RMN¹H. Les résultats sont donnés dans le tableau 6 suivant et reportés sur la figure 1 :

**Tableau 6**

| X | Mn | Mw | IP | Durée (min) |
|---|---|---|---|---|
| 20 | 2499 | 3222 | 1,29 | 10 |
| 50 | 5113 | 7233 | 1,41 | 15 |
| 100 | 7590 | 14154 | 1,86 | 30 |
| 200 | 15070 | 28867 | 1,72 | 50 |

La figure 1 représente la masse molaire en nombre du polymère synthétisé en fonction du rapport molaire monomère/(système catalytique) lors de la polymérisation du lac-OCA dans le dichlorométhane, en présence de n-pentanol en tant que réactif protique.

Ces résultats montrent que la masse molaire du polymère obtenu est une fonction linéaire du rapport molaire monomère/(système catalytique).

### Amorçage avec de l'isopropanol

Dans un tube de schlenk préalablement séché, on met en solution 328 mg de lac-OCA (2,83 mmol) dans 10 volumes de DCM. On ajoute successivement 14 µl d'isopropanol (0,19 mmol) et 23 mg de DMAP (0,19 mmol). On agite le milieu réactionnel à température ambiante. A la fin du dégagement de CO2, la réaction est contrôlée par RMN¹H.
Résultats : GPC : Mn=1908 ;Mw=2826 ; Ip=1,48

Ces résultats montrent que la nature du réactif protique n'a pas d'influence significative sur le contrôle de la polymérisation.

### Amorçage avec du lactate d'éthyle

Dans un tube de schlenk préalablement séché, on met en solution 197 mg de lac-OCA (1,71 mmol) dans 10 volumes de DCM. On ajoute successivement 20 µL de lactate d'éthyle (0,17 mmol) et 21 mg de DMAP (0,17 mmol). On agite le milieu réactionnel à température ambiante pendant 1 heure. On élimine le solvant sous pression réduite (0,5 mmHg ; t_{éb} lactate d'éthyle =153 °C/760 mmHg). On triture le polymère dans du pentane. On élimine le pentane. On sèche sous vide.
Résultats : GPC : Mn=1300 ;Mw=1770 ;Ip=1,35

La RMN¹H confirme l'incorporation du lactate d'éthyle.

Ces résultats montrent que la nature du réactif protique n'a pas d'influence significative sur le contrôle de la polymérisation.

### Exemple 9 : synthèse du monomère OCA-CF₃Me

### a) Synthèse de l'acide 2-hydroxy-2(trifluorométhyl)-propionique

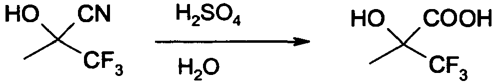

On ajoute la méthyl trifluorométhyl cyanhydrine (15,0 g : 108,0 mmol) goutte à goutte sur de l'acide sulfurique. On ajoute 75 mL d'eau avec précaution. Le milieu réactionnel est chauffé à 95°C pendant plusieurs heures, puis refroidit et saturé au chlorure de sodium. On extrait l'hydroxyacide à l'éther éthylique. On rassemble les phases éthérées et on les sèche sur du sulfate de sodium. On évapore le solvant sous pression réduite et on triture la poudre grise obtenue dans du pentane. On filtre l'hydroxyacide sous forme d'une poudre blanche (14,8 g ; 87%).
RMN ¹H (CDCl₃ 250 MHz) : 1,67 (s, 3H)
RMN ¹⁹F(CDCl₃ ; MHz) : -4,35 (s, CF₃)

### b) Synthèse du 5-méthyl-5-trifluorométhyl-1,3-dioxolane-2,4-dione

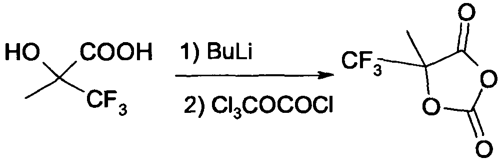

On ajoute lentement, sous atmosphère inerte et à froid, une solution de butyl lithium 2M dans le pentane (16,5 mL ; 33,0 mmol) à une solution d'hydroxyacide (4,74 g ; 30,0 mmol) dans 40 mL d'éther diéthylique. On agite le milieu réactionnel quelques heures puis on ajoute goutte à goutte du diphosgène (4,45 g ; 22,5 mmol) et le milieu réactionnel est agité plusieurs heures. Le solvant est éliminé, le résidu obtenu est agité en présence de charbon actif. On filtre le charbon et on évapore le solvant pour récupérer un liquide incolore (1,80 g ; 33%), Bp : 22°C / 0,3 mmHg.
RMN ¹H (CDCl₃ ; 250 MHz) : 1,92 (s, 3H)
RMN ¹⁹F (CDCl₃ MHz) : -3,25 (s, CF3)
RMN ¹³C (CDCl₃ ; 75 MHz) : 15,9 ; 83,3 (q, ²J_{CF}=33Hz) ; 120,6 (q, ¹J_{CF}=284Hz) ; 145,3 ; 161,8.

Ce monomère peut ensuite être polymérisé selon le procédé de polymérisation exemplifié ci-dessus.

## Revendications

1. Procédé de préparation de poly(α-hydroxy acides) comprenant les étapes successives suivantes :
i) polymérisation de monomères d'OCAs de formule (I), 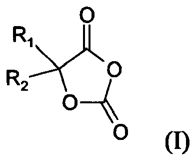 dans laquelle
R₁ et R₂, identiques ou différents, représentent indépendamment l'un de l'autre un radical choisi dans le groupe constitué par
■ l'hydrogène,
■ les radicaux alkyles en C₁-C₁₂, linéaires ou ramifiés, saturés ou insaturés,
■ les radicaux aralkyles en C₇-C₂₀,
■ les radicaux cycloalkyles, simples ou fusionnés, en C₃-C₁₄,
■ les radicaux hétérocycloalkyles, simples ou fusionnés en C₂-C₁₄,
■ les radicaux aromatiques, simples ou fusionnés, en C₆-C₁₄, et
■ les radicaux hétéroaromatiques, simples ou fusionnés en C₃-C₁₄ l'ensemble desdits radicaux étant éventuellement substitués par un ou plusieurs radicaux, le cas échéant protégés, choisis dans le groupe constitué par les halogènes, -NO₂, -OH, -NH₂, -SH, -COOH, -NH-NH₂ et -NH-C(NH)-NH₂ ;
ou
R₁ et R₂ forment ensemble un cycle ou un hétérocycle, simple ou fusionné, en C₄-C₁₄ ou C₃-C₁₄ respectivement, éventuellement substitué par un ou plusieurs radicaux, le cas échéant protégés, choisis dans le groupe constitué par les halogènes, -NO₂, -OH, -NH₂, - SH, -COOH, -NH-NH₂ et -NH-C(NH)-NH₂ ;
dans un solvant organique, avantageusement anhydre, à une température comprise entre -20 et 200°C, avantageusement entre 0 et 100°C, encore plus avantageusement entre 20 et 50°C; puis
ii) le cas échéant purification du polymère obtenu suite à l'étape i), et
iii) récupération du polymère obtenu suite à l'étape i) ou ii),
**caractérisé en ce que** la réaction de polymérisation de l'étape i) est réalisée de manière contrôlée en présence d'un système catalytique comprenant une base, ladite base étant un hétérocycle aromatique à 5 ou 6 chaînons comprenant au moins un atome d'azote endocyclique, sous réserve que lorsque la base est utilisée seule dans le système catalytique, elle ne représente pas la pyridine, la 2-méthylpyridine, la 2,6-diméthylpyridine ou la 2-méthoxypyridine.

2. Procédé selon la revendication 1, **caractérisé en ce que** R₁ et R₂ représentent, indépendamment l'un de l'autre, un radical choisi dans le groupe constitué par l'hydrogène, le méthyle et le phényle.

3. Procédé selon la revendication 1 ou 2, **caractérisé en ce que** ladite base est un hétérocycle aromatique à 5 ou 6 chaînons comprenant au moins un atome d'azote endocyclique conjugué avec un autre atome d'azote endo ou exocyclique.

4. Procédé selon la revendication 3, **caractérisé en ce que** ladite base est une amino-pyridine de formule (II) 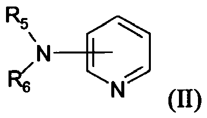 dans laquelle R₅ et R₆ représentent indépendamment l'un de l'autre un radical alkyle en C₁-C₆, linéaire ou ramifié, saturé ou insaturé, ou R₅ et R₆ forment ensemble un hétérocycloalkyle à 5 ou 6 chaînons, le groupe -NR₅R₆ étant en position 2 ou 4.

5. Procédé selon la revendication 4, **caractérisé en ce que** ladite base est la 4-diméthylamino pyridine.

6. Procédé selon la revendication 3, **caractérisé en ce que** ladite base est un imidazole de formule (III) 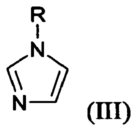 dans laquelle R représente un radical alkyle en C₁-C₆ linéaire ou ramifié, saturé ou insaturé.

7. Procédé selon la revendication 6, **caractérisé en ce que** ladite base est le N-méthyl-imidazole.

8. Procédé selon l'une quelconque des revendications précédentes, **caractérisé en ce que** le système catalytique comprend en outre un réactif protique.

9. Procédé selon la revendication 8, **caractérisé en ce que** le réactif protique est choisi dans le groupe constitué par l'eau, les alcools, les amines primaires et secondaires, les thiols et les polymères à fonctionnalité alcool, amino et thiol.

10. Procédé selon la revendication 8 ou 9, **caractérisé en ce que** le réactif protique est choisi dans le groupe constitué par l'eau, les alcools aliphatiques en C₁-C₁₂, les poly(acide glycolique), les poly(acide lactique) et leurs copolymères.

11. Procédé selon l'une quelconque des revendications précédentes, **caractérisé en ce que**, lors de l'étape i), le solvant organique est choisi dans le groupe constitué par les solvants aliphatiques chlorés, les éthers, les éthers cycliques ou les aromatiques.

12. Poly(α-hydroxy acide) de formule (IV) 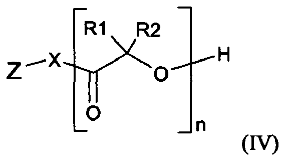 dans laquelle
• R1 et R2 ont la même signification que pour la formule (I) ;
• X représente un hétéroatome, choisi dans le groupe constitué par O, N et S, et Z représente un radical alkyle en C₁-C₁₂, linéaire ou ramifié, saturé ou insaturé ; ou
• -X-Z représente un polymère choisi dans le groupe constitué par les poly(acide glycolique), les poly(acide lactique) et leurs copolymères, lesdits polymères étant terminés par un radical -X'-Z' dans lequel X' représente un hétéroatome, choisi dans le groupe constitué par O, N et S, et Z' représente un radical alkyle en C₁-C₁₂, linéaire ou ramifié, saturé ou insaturé ;
• n est supérieur ou égal à 1.

13. Poly(α-hydroxy acide) selon la revendication 12, **caractérisé en ce que** n est compris entre 1 et 500, avantageusement entre 5 et 500, encore plus avantageusement entre 10 et 400 et encore plus avantageusement entre 15 et 350.

14. Poly(α-hydroxy acide) selon la revendication 12 ou 13, **caractérisé en ce que** dans la formule (IV), X représente l'hétéroatome O et Z représente un radical alkyle en C₁-C₆.

15. Poly(α-hydroxy acide) selon la revendication 12 ou 13, **caractérisé en ce que** dans la formule (IV), -X-Z représente un radical de formule (V) 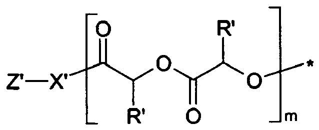 dans laquelle R' représente H ou CH₃, X' représente un hétéroatome, choisi dans le groupe constitué par O, N et S, et Z' représente un radical alkyle en C₁-C₁₂, linéaire ou ramifié, saturé ou insaturé.

16. Poly(α-hydroxy acide) selon la revendication 15, **caractérisé en ce que** dans la formule (IV), X' représente l'hétéroatome O et Z' représente un radical alkyle en C₁-C₆.

17. Utilisation d'un poly(α-hydroxy acide) selon l'une quelconque des revendication 12 à 16, pour la vectorisation de principes actifs.

18. Utilisation d'un poly(α-hydroxy acide) selon l'une quelconque des revendication 12 à 16, pour la fabrication de biomatériaux.

## Patentansprüche

1. Verfahren zur Herstellung von Poly(α-hydroxysäuren), die folgenden aufeinanderfolgenden Schritte umfassend:
i) Polymerisation von OCA-Monomeren der Formel (I) 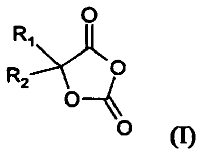 wobei
R₁ und R₂, die gleich oder verschieden sind, unabhängig voneinander einen Rest bedeuten, ausgewählt aus der Gruppe bestehend aus
■ Wasserstoff,
■ geradkettigen oder verzweigten, gesättigten oder ungesättigten C₁-C₁₂-Alkylresten,
■ C₇-C₂₀-Aralkylresten,
■ einzelnen oder kondensierten C₃-C₁₄-Cycloalkylresten,
■ einzelnen oder kondensierten C₂-C₁₄-Heterocycloalkylresten,
■ einzelnen oder kondensierten aromatischen C₆-C₁₄-Resten und
■ einzelnen oder kondensierten heteroaromatischen C₃-C₁₄-Resten,
wobei alle diese Reste gegebenenfalls durch einen oder mehrere Reste, die gegebenenfalls geschütz sind und die aus der Gruppe bestehend aus Halogen, - NO₂, -OH, -NH₂, -SH, -COOH, -NH-NH₂ und -NH-C(NH)-NH₂ ausgewählt sind, substituiert sind,
R₁ und R₂ zusammen einen einzelnen oder kondensierten Ring bzw. Heterocylus mit C₄-C₁₄ bzw. C₃-C₁₄ bilden, gegebenenfalls substituiert durch einen oder mehrere gegebenenfalls geschützte Reste, die aus der Gruppe bestehend aus Halogen, -NO₂, -OH, -NH₂, -SH, -COOH, -NH-NH₂ und -NH-C(NH)-NH₂ ausgewählt sind;
in einem organischen, vorteilhafterweise wasserfreien Lösungsmittel, bei einer Temperatur zwischen -20 und 200 °C, vorteilhafterweise zwischen 0 und 100 °C, noch günstiger zwischen 20 und 50 °C; dann
ii) gegebenenfalls Reinigung des in Schritt i) erhaltenen Polymers, und
iii) Gewinnung des in Schritt i) oder ii) erhaltenen Polymers,
**dadurch gekennzeichnet, dass** die Polymerisationsreaktion von Schritt i) in Gegenwart eines katalytischen Systems, das eine Base umfasst, kontrolliert abläuft, wobei die Base ein fünf- oder sechsgliedriger aromatischer Heterocyclus ist, der wenigstens ein endocyclisches Stickstoffatom umfasst, unter dem Vorbehalt, dass die Base, wenn sie alleine in dem katalytischen System verwendet wird, nicht Pyridin, 2-Methylpyridin, 2,6-Dimethylpyridin oder 2-Methoxypyridin darstellt.

2. Verfahren nach Anspruch 1,
**dadurch gekennzeichnet, dass** R₁ und R₂ unabhängig voneinander einen Rest darstellen, der aus der Gruppe bestehend aus Wasserstoff, Methyl und Phenyl ausgewählt ist.

3. Verfahren nach Anspruch 1 oder 2,
**dadurch gekennzeichnet, dass** die Base ein fünf- oder sechsgliedriger aromatischer Heterocyclus ist, der wenigstens ein endocyclisches Stickstoffatom umfasst, das mit einem anderen endo- oder exocyclischen Stickstoffatom konjugiert ist.

4. Verfahren nach Anspruch 3,
**dadurch gekennzeichnet, dass** die Base ein Aminopyridin ist, mit der Formel (II) 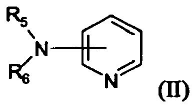 wobei R₅ und R₆ unabhängig voneinander einen geradkettigen oder verzweigten, gesättigten oder ungesättigten C₁-C₆-Alkylrest darstellen, oder R₅ und R₆ zusammen ein fünf- oder sechsgliedriges Heterocycloalkyl bilden, wobei die Gruppe -NR₅R₆ in Position 2 oder 4 vorliegt.

5. Verfahren nach Anspruch 4,
**dadurch gekennzeichnet, dass** die Base 4-Dimethylaminopyridin ist.

6. Verfahren nach Anspruch 3,
**dadurch gekennzeichnet, dass** die Base ein Imidazol ist, mit der Formel (III) 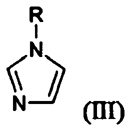 wobei R einen geradkettigen oder verzweigten, gesättigten oder ungesättigten C₁-C₆-Alkylrest darstellt.

7. Verfahren nach Anspruch 6,
**dadurch gekennzeichnet, dass** die Base N-Methylimidazol ist.

8. Verfahren nach einem der vorhergehenden Ansprüche,
**dadurch gekennzeichnet, dass** das katalytische System ferner ein protisches Reagens umfasst.

9. Verfahren nach Anspruch 8,
**dadurch gekennzeichnet, dass** das protische Reagen aus der Gruppe bestehend aus Wasser, Alkohlen, primären und sekundären Aminen, Thiolen und Polymeren mit Alkohl-, Amino- und Thiolfunktion ausgewählt ist.

10. Verfahren nach Anspruch 8 oder 9,
**dadurch gekennzeichnet, dass** das protische Reagens aus der Gruppe bestehend aus Wasser, aliphatischen C₁-C₁₂-Alkohlen, Poly(glykolsäuren), Poly(milchsäuren) und ihren Copolymeren ausgewählt ist.

11. Verfahren nach einem der vorhergehenden Ansprüche,
**dadurch gekennzeichnet, dass** in Schritt i) das organische Lösungsmittel aus der Gruppe bestehend aus chlorierten aliphatischen Lösungsmitteln, Ethern, cyclischen Ethern oder Aromaten ausgewählt ist.

12. Poly(α-hydroxysäure) der Formel (IV) 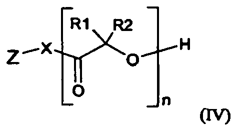 wobei
■ R1 und R2 sind wie definiert in Formel (I);
■ X ein Heteroatom bedeutet, ausgewählt aus der Gruppe bestehend aus O, N und S, und Z einen geradkettigen oder verzweigten, gesättigten oder ungesättigten C₁-C₁₂-Alkylrest darstellt; oder
■ -X-Z ein Polymer bedeutet, ausgewählt aus der Gruppe bestehend aus Poly-(glykolsäuren), Poly(milchsäuren) und ihren Copolymeren, wobei die Polymere endständig einen -X'-Z'-Rest aufweisen, in dem X' ein Heteroatom darstellt, ausgewählt aus der Gruppe bestehend aus O, N und S, und Z' einen geradkettigen oder verzweigten, gesättigten oder ungesättigten C₁-C₁₂-Alkylrest darstellt;
■ n größer oder gleich 1 ist.

13. Poly(α-hydroxysäure) nach Anspruch 12,
**dadurch gekennzeichnet, dass** n zwischen 1 und 500, vorteilhafterweise zwischen 5 und 500, noch günstiger zwischen 10 und 400 und noch günstiger zwischen 15 und 350 liegt.

14. Poly(α-hydroxysäure) nach Anspruch 12 oder 13,
**dadurch gekennzeichnet, dass** in der Formel (IV) X für das Heteroatom O steht und Z einen C₁-C₆-Alkylrest darstellt.

15. Poly(α-hydroxysäure) nach Anspruch 12 oder 13,
**dadurch gekennzeichnet, dass**, in der Formel (IV) -X-Z einen Rest der Formel (V) darstellt 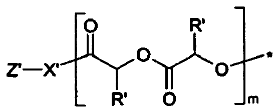 wobei R' H oder CH₃ bedeutet, X' ein Heteroatom darstellt, ausgewählt aus der Gruppe bestehend aus O, N und S, und Z' einen geradkettigen oder verzweigten, gesättigten oder ungesättigten C₁-C₁₂-Alkylrest bedeutet.

16. Poly(α-hydroxysäure) nach Anspruch 15,
**dadurch gekennzeichnet, dass** in der Formel (IV) X' das Heteroatom O darstellt und Z' einen C₁-C₆-Alkylrest bedeutet.

17. Verwendung einer Poly(α-hydroxysäure) nach einem der Ansprüche 12 bis 16, zur Vektorisierung von Wirkstoffen.

18. Verwendung einer Poly(α-hydroxysäure) nach einem der Ansprüche 12 bis 16, zur Herstellung von Biomaterialien.

## Claims

1. A method for preparing poly(α-hydroxy acids) comprising the following successive steps:
i) polymerization of OCA monomers of formula (I), 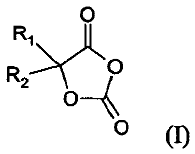 Wherein
R₁ and R₂ either identical or different, independently of each other, represent a radical selected from the group formed by
■ hydrogen,
■ saturated or unsaturated, linear or branched C₁-C₁₂ alkyl radicals,
■ C₇-C₂₀ aralkyl radicals,
■ simple or fused C₃-C₁₄ cycloalkyl radicals,
■ simple or fused C₂-C₁₄ heterocycloalkyl radicals,
■ simple or fused C₆-C₁₄ aromatic radicals, and
■ simple or fused C₃-C₁₄ heteroaromatic radicals, the whole of said radicals being optionally substituted with one or more radicals, if need be, protected, selected from the group formed by halogens, -NO₂, -OH, -NH₂, -SH, -COOH, -NH-NH₂, and -NH-C(NH)-NH₂;
or
R₁ and R₂ form together a simple or fused, respectively, C₄-C₁₄ or C₃-C₁₄ cycle or heterocycle, optionally substituted with one or more radicals, if need be, protected, selected from the group formed by halogens, -NO₂, -OH, -NH₂, -SH, -COOH, -NH-NH₂ and -NH-C(NH)-NH₂;
in an organic, advantageously anhydrous solvent at a temperature between -20 and 200°C, advantageously between 0 and 100°C, even more advantageously between 20 and 50°C; and then
ii) if need be, purification of the obtained polymer following step i), and
iii) recovery of the obtained polymer following step i) or ii),
**characterized in that** the polymerization reaction of step i) is performed in a controlled manner in presence of a catalytic system comprising a base, said base being a 5- or 6-membered aromatic heterocycle comprising at least one endocyclic nitrogen atom, with the proviso that when the base is used alone in the catalytic system, it does not represent pyridine, 2-methylpyridine, 2,6-dimethylpyridine or 2-methoxypyridine.

2. The method according to claim 1, **characterized in that** R₁ and R₂ represent independently of each other, a radical selected from the group formed by hydrogen, methyl and phenyl.

3. The method according to claim 1 or 2, **characterized in that** said base is a 5- or 6-membered aromatic heterocycle comprising at least one endocyclic nitrogen atom conjugated with another endocyclic or exocyclic nitrogen atom.

4. The method according to claim 3, **characterized in that** said base is an amino-pyridine of formula (II) 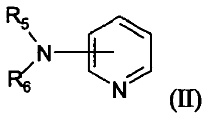 wherein R₅ and R₆ represent independently of each other, a saturated or unsaturated, linear or branched C₁-C₆ alkyl radical, or R₅ and R₆ form together a 5- or 6-membered heterocycloalkyl, the -NR₅R₆ group being in position 2 or 4.

5. The method according to claim 4, **characterized in that** said base is 4-dimethylamino pyridine.

6. The method according to claim 3, **characterized in that** said base is an imidazole of formula (III) 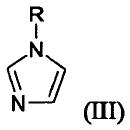 wherein R represents a saturated or unsaturated, linear or branched, C₁-C₆ alkyl radical.

7. The method according to claim 6, **characterized in that** said base is N-methyl-imidazole.

8. The method according to any of the preceding claims, **characterized in that** the catalytic system further comprises a protic reagent.

9. The method according to claim 8, **characterized in that** the protic reagent is selected from the group formed by water, alcohols, primary and secondary amines, thiols and polymers with alcohol, amino and thiol functionalities.

10. The method according to claim 8 or 9, **characterized in that** the protic reagent is selected from the group formed by water, aliphatic C₁-C₁₂ alcohols, poly(glycolic acids), poly(lactic acids) and their copolymers.

11. The method according to any of the preceding claims, **characterized in that**, during step i), the organic solvent is selected from the group formed by chlorinated aliphatic solvents, ethers, cyclic ethers or aromatics.

12. A poly(α-hydroxy acid) of formula (IV) 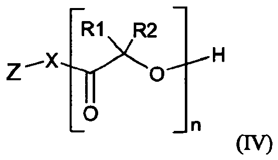 wherein
• R1 and R2 have the same meaning as given for formula (I);
• X represents a heteroatom selected from the group formed by O, N and S, and Z represents a saturated or unsaturated, linear or branched C₁-C₁₂ alkyl radical; or
• -X-Z represents a polymer selected from the group formed by poly(glycolic acids), poly(lactic acids), and their copolymers, said polymers being terminated by a radical -X'-Z' wherein X' represents a heteroatom selected from the group formed by O, N and S, and Z' represents a saturated or unsaturated, linear or branched C₁-C₁₂ alkyl radical;
• n is larger than or equal to 1.

13. The poly(α-hydroxy acid) according to claim 12, **characterized in that** n is between 1 and 500, advantageously between 5 and 500, even more advantageously between 10 and 400 and even more advantageously between 15 and 350.

14. The poly(α-hydroxy acid) according to claim 12 or 13, **characterized in that** in formula (IV), X represents the O heteroatom and Z represents a C₁-C₆ alkyl radical.

15. The poly(α-hydroxy acid) according to claim 12 or 13, **characterized in that** in formula (IV), -X-Z represents a radical of formula (V) 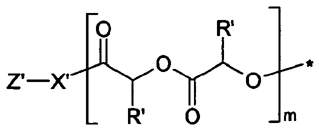 wherein R' represents H or CH₃, X' represents a heteroatom selected from the group formed by O, N and S, and Z' represents a saturated or unsaturated, linear or branched C₁-C₁₂ alkyl radical.

16. The poly(α-hydroxy acid) according to claim 15, **characterized in that** in formula (IV), X' represents the O heteroatom and Z' represents a C₁-C₆ alkyl radical.

17. The use of a poly(α-hydroxy acid) according to any of claims 12 to 16 for vectoring active ingredients.

18. The use of a poly(α-hydroxy acid) according to any of claims 12 to 16 for making biomaterials.
